# EUROPÄISCHE PATENTSCHRIFT

(11) **EP 1 395 792 B1**
(45) Veröffentlichungstag und Bekanntmachung des Hinweises auf die Patenterteilung: **13.02.2008**
(21) Anmeldenummer: 02754616.7
(22) Anmeldetag: 04.06.2002
(51) Int. Cl.: G01C 9/26

(54) **WASSERWAAGE**
SPIRIT LEVEL
NIVEAU A BULLE

(30) Priorität: 11.06.2001 DE 20109656 U
(43) Veröffentlichungstag der Anmeldung: 10.03.2004
(73) Patentinhaber: Stabila Messgeräte Gustav Ullrich GmbH, 76855 Annweiler (DE)
(72) Erfinder: VON WEDEMEYER, Peter, 76855 Annweiler (DE)
(74) Vertreter: Stoffregen, Hans-Herbert
(86) Internationale Anmeldenummer: PCT/EP2002/006068
(87) Internationale Veröffentlichungsnummer: WO 2002/101330

(56) Entgegenhaltungen:
- GB-A- 1 155 287
- US-A- 3 383 772
- US-A- 3 648 378
- US-A- 4 150 492
- US-A- 4 399 616
- US-A- 5 577 327

## Beschreibung

Die Erfindung bezieht sich auf eine Wasserwaage umfassend ein erstes und zweites Profilelement, die teleskopartig zueinander verschiebbar und über ein Feststellelement zueinander fixierbar sind, wobei das erste Profilelement ein Hohlprofil ist.

Der US 6,047,478 ist eine teleskopierbare Wasserwaage zu entnehmen, wobei durch Formschluss eine Ausrichtung teleskopierbarer Elemente erreicht wird. Nach der US 1,137,169 werden Abschnitte einer Wasserwaage zueinander verschwenkt, um eine gewünschte Länge zu erzielen.

Die DE 196 05 868 bezieht sich auf eine Wasserwaage, die einen Grundkörper aufweist, der verschiebbar eine Verlängerung aufnimmt, bei der es sich um ein Vollprofil mit kreuzförmigem Querschnitt handelt, das in einer entsprechend angepassten Ausnehmung des Wasserwaagelängskörpers verschiebbar angeordnet ist.

Bei der aus dem DE 299 22 75 A1 bekannten teleskopisch ausziehbaren Wasserwaage sind zueinander verschiebbare Profile vorgesehen, die über Arretierschrauben zueinander fixierbar sind.

Die US 5,249,349 bezieht sich auf eine teleskopierbare Wasserwaage mit koaxial zueinander verlaufenden Profilabschnitten.

Weitere ausziehbare bzw. verlängerbare Wasserwaagen sind z.B. dem DE 75 23 018 U, dem DE 80 05 439 U, der US 3,104,477, der US 3,648,378, der US 5,412,875, der US 684,846 oder CH 646 251 A5 zu entnehmen.

Bekannte teleskopierbare Wasserwaagen sind entweder konstruktiv aufwendig oder nicht hinreichend stabil, um üblichen Anforderungen von Wasserwaagen zu genügen. Hierdurch bedingt kann der Nachteil auftreten, dass bei ausgezogener Wasserwaage die Messsohlen bzw. -flächen der jeweiligen Enden nicht zueinander fluchten.

Es besteht z.B. die Möglichkeit, über ein Spindelelement ineinandergreifende Profilelemente zu fixieren, um eine gewünschte Messlänge zur Verfügung zu stellen. Dabei kann ein T-förmiges Innenprofil in einem sich im Schnitt aus einem trapezförmigen Basisabschnitt und einem rechteckigen Kopfabschnitt bestehenden Außenprofil angeordnet sein, so dass nur eine Außenfläche als Messfläche nutzbar ist (US 3,648,378). Da das die Profile gegeneinander fixierende Spindelelement über dem Außenprofil vorsteht, besteht die Gefahr, dass dann, wenn eine entsprechende Wasserwaage herunterfällt, das Spindelelement verbogen wird, so dass eine weitere Nutzung nicht möglich ist.

Ein häufiger Lösungsvorschlag sieht über Rund- oder Vierkantstäbe verbundene äußere Profilelemente vor, um eine Längenveränderung zu ermöglichen (US 3,104,477, CH 646 251, US 5,412,875). Durch die Verbindungsart über die Stabprofile ist jedoch häufig die gewünschte Stabilität nicht gewährleistet.

Auch besteht die Möglichkeit, in Längsrichtung geteilte Profile über eine Schwalbenschwanzverbindung miteinander zu verbinden, um diese gegeneinander zu verschieben (US 5,412,875).

Unabhängig von der Konstruktion zeigen die teleskopierbaren Wasserwaagen grundsätzlich den Nachteil, dass sich eine entlang einer Geraden verlaufende durchgehende oder im wesentlichen durchgehende Messsohle bzw. -fläche nicht ergibt, die häufig wünschenswert wäre.

Der vorliegenden Erfindung liegt das Problem zu Grunde, eine auszieh- bzw. teleskopierbare Wasserwaage der eingangs genannten Art so weiterzubilden, dass bei einfacher Konstruktion eine verbindungssteife Verbindung zwischen zueinander verstellbaren Abschnitten gegeben ist, wobei sichergestellt werden soll, dass die Messsohlen bzw. -flächen der einzelnen Abschnitte unabhängig von der Länge der Wasserwaage stets fluchtend zueinander entlang einer Geraden ausgerichtet sind. Auch soll gegebenenfalls die Möglichkeit geschaffen sein, unabhängig von der Länge der Wasserwaage eine durchgehende oder im Wesentlichen durchgehende Messfläche bzw. -sohle nutzen zu können.

Erfindungsgemäß wird das Problem im Wesentlichen dadurch gelöst, dass das erste Profilelement in eine erste und eine zweite Längskammer unterteilt ist, dass das erste Profilelement aus einem ersten und einem zweiten Abschnitt besteht, die über das zweite Profilelement miteinander verbunden sind, dass das zweite Profilelement fest mit dem ersten Abschnitt verbunden ist und dass der zweite Abschnitt entlang des zweiten Profilelementes verschiebbar ist, dass von der ersten Längskammer ein Spannelement als das Feststellelement ausgeht, dass sich in der zweiten Längskammer das zweite Profilelement erstreckt, wobei über das Spannelement einerseits bei bereichsweise von dem zweiten Abschnitt unbedecktem zweitem Profilelement dieses in Richtung einer Profilwandung des zweiten Abschnitts des ersten Profilelementes kraftbeaufschlagbar ist und andererseits das zweite Profilelement zu dem zweiten Abschnitt des ersten Profilelementes fixierbar ist.

Erfindungsgemäß wird in dem ersten als Hohlprofil ausgebildeten Profilelement ein zweites Profilelement insbesondere ebenfalls in Form eines Hohlprofils geführt, das derart in Richtung einer Profilwandung des ersten Profilelementes oder Außenprofils kraftbeaufschlagbar ist, dass die Profilelemente mit ihren Längsachsen parallel zueinander ausgerichtet sind mit der Folge, dass die Messsohlen bzw. -flächen des ersten Abschnitts des ersten Profilelementes unabhängig von der tatsächlichen Länge der Wasserwaage fluchtend zueinander ausgerichtet sind.

Dabei übt das Feststellelement eine Doppelfunktion insoweit aus, als dass einerseits das erste Profilelement zu dem zweiten Profilelement in gewünschter ausgezogener Länge der Wasserwaage zueinander fixiert wird und andererseits gleichzeitig über das Feststellelement das zweite Profilelement oder innere Profil in Richtung Innenfläche insbesondere der Profilwandung beaufschlagt wird, die außenseitig die Messsohle bzw. -fläche bildet.

Um die parallele Ausrichtung des zweiten Profilelementes zu dem ersten Profilelement sicherzustellen, wird ersteres in einem Abstand zu dem Feststellelement, insbesondere im Endbereich des zweiten Profilelementes in Richtung der entsprechenden Profilwandung des ersten Profilelementes kraftbeaufschlagt. Vorzugsweise wird das zweite Profilelement zumindest in drei Bereichen in Richtung der Profilwandung des ersten Profilelementes kraftbeaufschlagt.

Bei dem Feststellelement kann es sich um ein Spindelelement, Schnellspannelement oder insbesondere um einen Exzenterhebel handeln, der seinerseits einen zum Verschwenken des Hebels abragenden Betätigungsschenkel oder -hebel aufweist, der bei das zweite Profilelement zu dem ersten Profilelement fixierender Stellung dem ersten Abschnitt zugewandte freie Stirnfläche des zweiten Abschnitts überragt.

Das Spannen des Exzenterelementes erfolgt dann, wenn das zweite Profilelement im gewünschten Umfang aus dem ersten Profilelement herausgezogen ist.

Um bei unbeabsichtigtem Zusammenschieben der Profilelemente durch z.B. Herunterfallen der Wasserwaage sicherzustellen, dass die von dem Exzenterhebel hervorgerufene Kraftbeaufschlagung auf das zweite Profilelement aufgehoben ist, sieht eine Weiterbildung der Erfindung vor, dass beabstandet zu dem ersten Abschnitt zugewandter freier Stirnfläche des ersten Abschnitts des ersten Profilelementes ein den Schenkel des Exzenterhebels verschwenkendes Anschlagelement verläuft. Dieses Anschlagelement bewirkt, dass, wenn der Exzenterhebel in seiner Fixierstellung verläuft, ein Verschwenken in seine Öffnungsstellung automatisch dann erfolgt, wenn der Schenkel auf das Anschlagelement aufgeschoben wird.

Dabei kann das Anschlagelement von einem in dem ersten Abschnitt angeordneten Einsatz ausgehen, der ein im Querschnitt H-förmiges Element wie insbesondere ein Kunststoffspritzgusselement ist. Zur einfachen Herstellung des Einsatzes sollte dieser aus zwei identischen Teilen bestehen, die jeweils einen T-förmigen Querschnitt aufweisen, so dass bei zusammengesetztem Einsatz die Mittelschenkel den Querschenkel des H-förmigen Profilelementes bilden.

Das das erste Profilelement bildende Hohlprofil ist in zumindest zwei Längskammern unterteilt, wobei sich in der einen ersten Kammer das zweite Profilelement erstreckt und in der weiteren zweiten Längskammer das Spannelement gelagert ist. Des Weiteren kann in der zweiten Längskammer des zu dem zweiten Profilelement verschwenkbaren Abschnitts ein Einsatz angeordnet sein, der dem in dem ersten Abschnitt entspricht und das Anschlagelement für den Betätigungsschenkel des Exzenterhebels aufweist. Somit wird der jeweilige Querschnitt der zweiten Längskammer durch den Querschenkel des H-förmigen Profilelementes verschlossen, so dass Schmutzablagerungen in der zweiten Längskammer der Abschnitte weitgehend ausgeschlossen sind.

Der Exzenterhebel, der schwenkbar in der zweiten Längskammer angeordnet ist, setzt sich insbesondere aus einem von dessen Schwenkachse durchsetzten Basisabschnitt und den von diesem ausgehenden Betätigungsschenkel oder -hebel zusammen. Dabei durchsetzt der Basisabschnitt bei gespanntem Exzenterhebel eine die erste Längskammer von der zweiten Längskammer trennenden Zwischenwand, um mit dem zweiten Profilelement zusammenzuwirken. Hierzu ist insbesondere vorgesehen, dass eine Außenfläche des Exzenterhebels in dessen gespannter Position sich entlang des zweiten Profilelementes erstreckt und an diesen unmittelbar und/oder zumindest einen von der Außenfläche des Exzenterhebels ausgehenden Vorsprung abstützt.

In Weiterbildung der Erfindung wird vorgeschlagen, dass mit dem zweiten Profilelement zu dessen Kraftbeaufschlagung in Richtung der Profilwandung wie Profilaußenwandung zumindest ein Druckelement zusammenwirkt, das sich einerseits an der Trennwand und andererseits an dem zweiten Profilelement abstützt.

Hierzu ist insbesondere vorgesehen, dass das zweite Profilelement ein Hohlprofil ist, dass das zweite Profilelement trennwandseitig zumindest bereichsweise von einer Kappe abgedeckt ist, die einen ins Innere des zweiten Profilelementes sich erstreckenden Vorsprung aufweist, der ein Federelement aufnimmt, welches einerseits innenseitig an der Kappe und andererseits mittelbar oder unmittelbar an gegenüberliegender Wandung des zweiten Profilelementes bzw. deren Innenfläche abstützt. Dabei kann die kraflbeaufschlagte Wandung des zweiten Profilelementes gegenüber der Innenfläche der Profilwandung des ersten Profilelementes über ein Gleitelement abgestützt sein. Ein entsprechendes Gleitelement befindet sich dabei in allen Bereichen, in denen eine Kraftbeaufschlagung des zweiten Profilelementes in Richtung des ersten Profilelementes erfolgt.

Auch sieht ein Vorschlag der Erfindung vor, dass das zweite Profilelement gegenüber dem ersten Profilelement über Kugeldruckteile abgestützt ist, über die die gewünschte Kraftbeaufschlagung zwischen den Profilelementen zum parallelen Ausrichten deren Längsachsen erfolgt, wobei insbesondere die das zweite Profilelement aufnehmende Längskammer erste Längskammer ist und messsohlen- bzw. -flächenseitig verläuft.

Ein einen selbständigen Schutz genießender Vorschlag der Erfindung sieht vor, dass zur Ausbildung einer durchgehenden oder im wesentlichen durchgehenden Messsohle bzw. -fläche zwischen Messsohle bzw. -fläche der ersten und zweiten Abschnitte des ersten Profilelementes entlang zwischen diesen verlaufender Außenfläche des zweiten Profilelementes ein Band- oder Gurtelement verläuft, das außenseitig fluchtend zu den angrenzenden Messsohlen- bzw. -flächenabschnitten verläuft. Dabei kann das Bandelement federvorgespannt sein und insbesondere innerhalb des zweiten Profilelementes über Umlenkrollen geführt sein.

Zur Fixierung des Bandelementes an der Außenfläche des zweiten Profilelementes sieht eine bevorzugte Ausführungsform der Erfindung vor, dass das Bandelement magnetisch an der Außenfläche fixierbar ist. Hierzu kann das Band- wie Gurtelement profilelementseitig ferritisches Material sein und das zweite Profilelement auf dessen Außenfläche ausgerichtete Magnete aufweisen.

Erfindungsgemäß ist ein Band oder Gurt vorgesehen, das bzw. der kalibriert ist und eine Materialstärke aufweist, um den Freiraum zwischen Außenfläche des zweiten oder inneren Profilelementes und den diesen randseitig begrenzenden Messsohlen bzw. -flächen des ersten und zweiten Abschnitts des ersten Profilelementes oder Außenprofils auszufüllen. Dabei wird bevorzugterweise das Band bzw. der Gurt durch in dem zweiten Profilteil vorhandene Magnete fixiert, wodurch die Genauigkeit einer Messung verbessert wird. Selbstverständlich besteht auch die Möglichkeit, das Band bzw. den Gurt in einer Art Schwalbenschwanzführung, die in dem Außenflächenbereich des zweiten Profilelementes vorgesehen ist, zu führen. Andere Lösungsmöglichkeiten sind gleichfalls denkbar.

Das Band bzw. der Gurt kann im Bereich des ersten Abschnitts des ersten Profilelements bzw. im mit dem ersten Profilelement verbundenen Endbereich des zweiten Profilelements um eine Rolle geführt werden und vorzugsweise entweder am gegenüberliegenden Ende des zweiten Profilelements oder im ersten Profilelement über ein Spannelement wie federvorgespannte Rolle spannbar und aufrollbar sein. Gegebenenfalls reicht auch ein Zugfederelement aus, das den Gurt bzw. das Band im erforderlichen Umfang spannt. Auch ist eine Abstimmung möglich, bei der die Bandlänge gleich bleibt.

Bei dem Band- bzw. Gurtmaterial kann es sich um ein solches aus Kunststoffgewebe oder eine Art Treibriemen mit ferritischer Unterlage handelt. Alternativ besteht die Möglichkeit, ein Stahlband zu verwenden, das zumindest einseitig mit Gummi auf vulkanisiert ist.

Nach einem weiteren Vorschlag können entlang des Innenprofils ein oder mehrere Schiebeelemente längsverschiebbar angeordnet sein, wobei dessen bzw. deren entlang der Außenfläche des zweiten Profilelementes verlaufende Abschnitte eine Stärke aufweisen, die den Abstand zwischen der Außenfläche und der Messsohle bzw. -fläche des ersten und zweiten Abschnitts des ersten Profilelementes höhenmäßig ausgleicht.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden Ausführungsbeispielen.

Es zeigen:
- Fig. 1: einen Längsschnitt durch eine Wasserwaage, teilweise gebrochen,
- Fig. 2: einen Querschnitt der Wasserwaage entlang der Linie II-II in Fig. 1,
- Fig. 3: einen Einsatz und

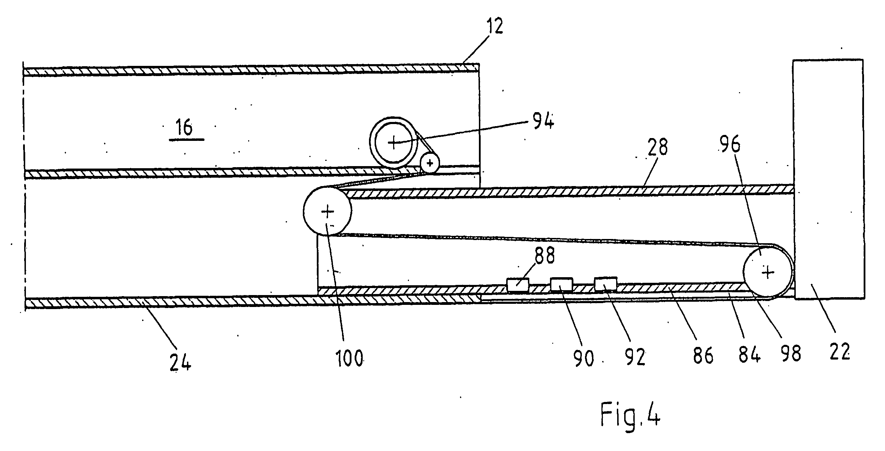

- Fig. 4: eine Prinzipdarstellung einer Weiterbildung der Wasserwaage gemäß Fig. 1.

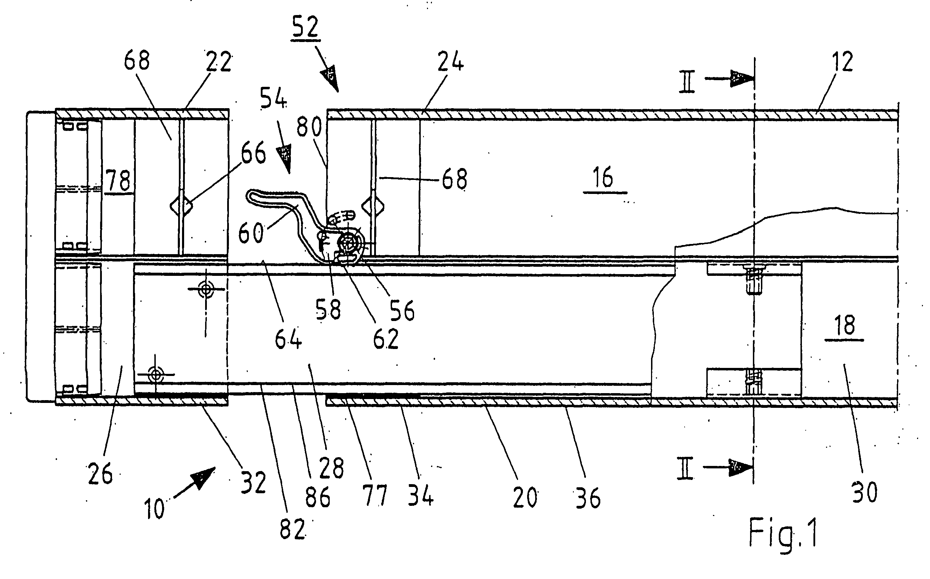

In Fig. 1 ist rein prinzipiell eine teleskopierbare Wasserwaage 10 dargestellt, die insbesondere aus Metall, jedoch auch anderen geeigneten Materialien wie Kunststoff bestehen kann. Dabei sind im Wesentlichen nur die die Erfindung prägenden Merkmale dargestellt, ohne dass sonstige Funktionselemente wie Libellen eingezeichnet sind.

Die Wasserwaage 10 ist erfindungsgemäß teleskopierbar, also ausziehbar ausgebildet, um entsprechend den Einsatzzwecken eine gewünschte Länge zur Verfügung zu stellen. Unabhängig hiervon kann die Wasserwaage im nicht ausgezogenen Zustand z.B. eine Länge von 120cm oder 200cm aufweisen, um im maximal ausgezogenen Zustand eine wirksame Gesamtlänge von z.B. 200cm oder 350cm zur Verfügung zu stellen. Diese Zahlen sind jedoch rein beispielhaft angegeben, ohne dass hierdurch eine Einschränkung der erfindungsgemäßen Lehre erfolgt.

Die Wasserwaage 10 besteht aus einem ersten Profilelement 12, das ein Außenprofil ist und das durch eine Trennwand 14 in eine erste in der Zeichnung obere Längskammer 16 und eine zweite untere Längskammer 18 unterteilt ist, deren bodenseitige Außenfläche Messsohle bzw. -fläche 20 ist.

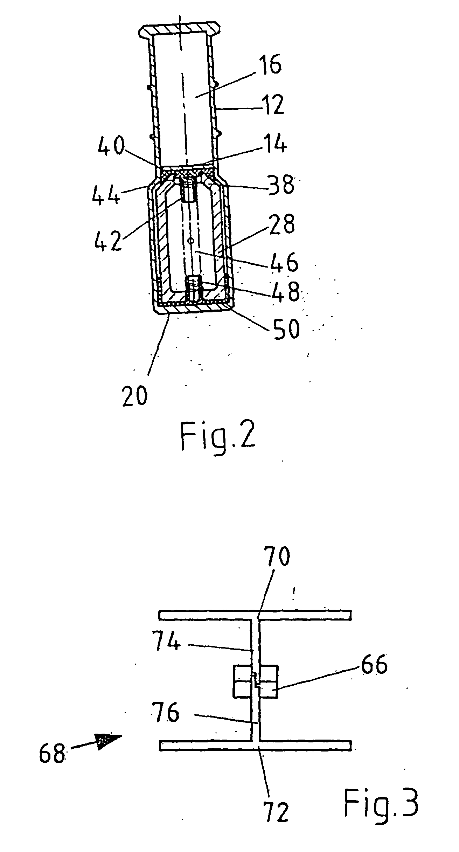

Weist entsprechend der Schnittdarstellung nach der Fig. 2 die obere Kammer 16 eine geringere Breitenerstreckung als die untere Längskammer 18 auf, so können jedoch auch andere Abmessungen gewählt sein.

Das erste Profilelement 12 oder Außenprofil ist in zwei Abschnitte 22, 24 unterteilt, wobei in der zweiten oder unteren Längskammer 26 des kürzeren Abschnitts 22 ein ebenfalls als Hohlprofil ausgebildetes zweites Profilelement 28 fixiert ist, das sich innerhalb der unteren oder zweiten Längskammer 18 des zweiten Abschnitts 24 des ersten Profilelementes 12 derart erstreckt, dass dieses entlang dem zweiten Profilelement 28 längsverschiebbar ist, um so eine gewünschte wirksame Gesamtlänge der Wasserwaage 10 einstellen zu können. Dabei können gegebenenfalls an zumindest einer Außenfläche des zweiten Profilelementes 28 Maßangaben zur Bestätigung der wirksamen Länge der Wasserwaage 10 vorgesehen sein.

Damit unabhängig von der Länge der Wasserwaage 10, also dem Abstand der Abschnitte 22, 24 des ersten Profilelementes 12, die Messsohle 20 bzw. die von den Abschnitten 22, 24 des ersten Profilelementes 12 bodenseitig verlaufenden Bereiche 32, 34 einerseits fluchtend entlang einer gemeinsamen Linie verlaufen und andererseits die Abschnitte 22, 24 im gewünschten Abstand zueinander fixierbar sind, sind nachstehende erfindungsgemäße Lösungsvorschläge vorgesehen, die jeweils für sich eigenerfinderischen Gehalt aufweisen.

Um eine parallele Ausrichtung der Längsachse des zweiten Profilelementes 28 zu der Längsachse des ersten Profilelementes 12 und damit der zweiten Längskammer 18 sicherzustellen, erfährt das zweite Profilelement 28 eine Kraftbeaufschlagung in Richtung der außenseitig die Messsohle bzw. -fläche 20, 32, 34 aufweisenden Bodenwandung 36 mit der Folge, dass eine Parallelausrichtung der Profilelemente 12, 28 zueinander gegeben ist.

Die entsprechende Kraftbeaufschlagung des zweiten Profilelementes 28 in Richtung der Bodenwandung 36 des ersten Profilelementes 12 kann z.B. über nicht dargestellte Kugeldruckstücke erfolgen, die zwischen der Trennwand 14 des ersten Profilelementes 12 und dem zweiten Profilelement 28 wirken.

Entsprechend der zeichnerischen Darstellung sind jedoch andere Realisierungen gegeben. So weist das zweite Profilelement 28 trennwandseitig einen im Schnitt trapezförmigen Kopfabschnitt 38 auf, entlang dessen sich außenseitig ein Aufsatz 40 insbesondere aus Kunststoff erstreckt, dessen Geometrie dem Querschnitt der Längskammer 18 im trennwandseitigen Bereich 14 entspricht, wie die Schnittdarstellung der Fig. 2 verdeutlicht.

Der Aufsatz 40 durchsetzt mit einem zylindrischen Vorsprung 42 eine Öffnung 44 des zweiten Profilelementes 28 und ist von einem Federelement wie Schraubenfeder 46 umgeben, das sich innenflächenseitig im Bodenbereich des zweiten Profilelementes 28 abstützt. Zur Fixierung umgibt das Schraubenfederelement 46 koaxial einen inneren Vorsprung 48, der seinerseits von einem im Schnitt U-förmigen Gleitelement 50 ausgeht, der zwischen Innenfläche der bodenseitigen oder unteren Längskammer 18 und angrenzender Außenfläche des zweiten Profilelementes 28 verläuft, um so ein reibungsarmes Verschieben des zweiten Profilelementes 28 zu dem ersten Profilelement 12 zu ermöglichen.

Ungeachtet dessen wirkt das Federelement einerseits unmittelbar auf den Aufsatz 40 bzw. die Abdeckung und stützt sich somit mittelbar auf der Zwischenwandung 14, also dem ersten Profilelement 12 ab. Auf der gegenüberliegenden Seite erfolgt ein unmittelbares Abstützen auf dem zweiten Profilelement 28, so dass dieses infolgedessen stets eine Kraftbeaufschlagung in Richtung der Bodenwandung 36 mit der Folge erfährt, dass ein paralleles Ausrichten des zweiten Profilelementes 28 zu dem ersten Profilelement 12 gegeben ist, so dass die Abschnitte 32, 34 der Messsohle bzw. -fläche 20 unabhängig von dem Abstand der Abschnitte 22, 24 des ersten Profilelementes 12 stets fluchtend zueinander ausgerichtet sind.

Insbesondere ist vorgesehen, dass das zweite Profilelement 28 in seinem innerhalb des zweiten Abschnitts 24 des ersten Profilelementes 12 verlaufenden Endbereich über zwei zueinander beabstandete Abstützungen druckbeaufschlagt ist, um die erforderliche Ausrichtung zu erfahren. Zusätzlich erfolgt im offenen Stirnrandbereich 52 des zweiten Abschnitts 24 des ersten Profilelementes 12 eine weitere Kraftbeaufschlagung des zweiten Profilelementes 28 in Richtung der Bodenwandung 36 des ersten Profilelementes 12, und zwar dann, wenn das erste und zweite Profilelement 12, 28 zueinander fixiert sind.

Dieses Fixieren oder Feststellen erfolgt über ein Spannelement, das grundsätzlich einen bekannten Aufbau aufweisen kann, also auch konstruktiv über eine Spindel oder über ein federbeaufschlagtes Klemmelement erfolgen kann. Erfindungsgemäß ist das Spannelement jedoch als Exzenterhebel 54 ausgebildet, das um eine Achse 56 drehbar in dem ersten Profilelement 12, und zwar in dessen oberer Längskammer 16 gelagert ist. Die Achse 56 durchsetzt einen im Schnitt ovalen oder ellipsenförmigen Basisabschnitt 58 des Exzenterhebels 54, von dem ein Schwenk- oder Betätigungsschenkel oder -hebel 60 ausgeht, über den der Exzenterhebel 54 in das zweite Profilelement 28 fixierende Stellung (siehe Fig. 1) verschwenkt werden kann oder - entsprechend der zeichnerischen Darstellung - durch Verschwenken im Uhrzeigersinn entarretierbar ist.

Beim Fixieren des zweiten Profilelementes 28 liegt der Basisabschnitt 58 mit einer Fläche 62 bzw. von dieser ausgehenden nicht näher gekennzeichneten Vorsprüngen, die einen Toleranzausgleich ermöglichen, auf trennwandseitig 40 verlaufender Außenfläche 64 des zweiten Profilelementes 28 derart auf, dass die erforderliche Kraftbeaufschlagung des zweiten Profilelementes 28 in Richtung der Bodenwandung 36 des ersten Profilelementes 12 erfolgt. Dabei verläuft sich im Bereich der Krafteinleitung zwischen dem zweiten Profilelement 28 und der Innenfläche der Bodenwandung 36 ein Gleitelement 77, dessen Dicke im Bereich der Bodenwandung 36 der des Gleitelementes 50 entsprechend der Fig. 2 entspricht, so dass infolgedessen das zweite Profilelement 28 stets im gleichen Abstand zur Innenfläche der Bodenwandung 36 des ersten Profilelementes 12 verläuft und somit sichergestellt ist, dass bei ordnungsgemäßer Kraftbeaufschlagung ein paralleles Ausrichten der Längsachsen des zweiten Profilelementes 28 zu der des ersten Profilelementes 12 gegeben ist.

Um bei unkontrolliertem, durch z. B. bei Herabfallen der Wasserwaage 10, erfolgtem Zusammenschieben der Abschnitte 22, 24 bei sich noch in Arretierstellung befindlichem Exzenterhebel 54 sicherzustellen, dass dieser gelöst wird, erstreckt sich in dem Verschiebeweg des Schwenk- oder Betätigungsschenkels 60 ein Vorsprung 66, der von einem Einsatz 68 ausgeht, der in der ersten oder oberen Längskammer 16 des Abschnitts 22 des ersten Profilelementes 12 angeordnet ist.

Somit wird dann, wenn der Schenkel 60 mit dem Vorsprung 66 wechselwirkt, der Exzenterhebel 54 entsprechend der zeichnerischen Darstellung im Uhrzeigersinn verschwenkt, wodurch das zweite Profilelement 28 freigegeben und somit im gewünschten Umfang innerhalb der bodenseitigen Längskammer 18 verschiebbar ist.

Der Einsatz 68 weist im Schnitt eine H-Form auf und besteht aus zwei T-förmigen Profilteilen 70, 72, die identisch aufgebaut und entsprechend der zeichnerischen Darstellung nach Fig. 3 zusammengesetzt sind.

Die T-Profile 70, 72 bilden mit ihren Mittelschenkeln 74, 76 den Querschenkel des H-förmigen Einsatzes 68 und verschließen den Querschnitt der Längskammer 16, d. h. dessen Bereich 78 im zweiten Abschnitt 22 des ersten Profilelementes 12. Ein entsprechender Einsatz 68 kann auch beabstandet zur freien Stirnfläche 80 des zweiten Abschnitts 24 des ersten Profilelementes 12 vorgesehen sein, wie die Schnittdarstellung gemäß Fig. 1 verdeutlicht. Dabei verläuft die Schwenkachse 56 des Exzenterhebels 54 zwischen der freien Stirnfläche 80 und dem von den Mittelschenkeln 74, 76 gebildeten Querschenkel des Einsatzes 68.

Zu erwähnen ist des Weiteren, dass das Spannelement wie der Exzenterhebel 54 bei nicht verlängerter Wasserwaage 10, wenn also die Abschnitte 22, 24 des ersten Profilelementes 16 aufeinanderstoßen, vollständig innerhalb der oberen Längskammer 16 verläuft, so dass ein Schutz gegeben ist.

Bei zueinander beabstandetem ersten und zweiten Abschnitten 22, 24 des ersten Profilelementes 12 ist die Messfläche oder -sohle 20, 32, 34 im Bereich des frei zugänglichen zweiten Profilelementes 28, also in Fig. 1 im Bereich 82 unterbrochen. Somit steht keine durchgehende Messsohle bzw. -fläche 20 zur Verfügung.

Erfindungsgemäß ist nun vorgesehen, dass der entsprechende Bereich 82 durch ein Band- oder Gurtelement 84 abdeckbar ist, dessen wirksame Stärke dem Abstand zwischen der freien Außenfläche 86 des zweiten Profilelementes 28 und Außenfläche, also Messsohle bzw. - fläche 20, 32, 34 des ersten Profilelements 12 entspricht. Das Gurtelement 84 kann z. B. profilseitig aus ferritischem Material bestehen, um somit auf der Außenfläche 86 des zweiten Profilelementes 28 über dieser zugeordnete Magnete 88, 90, 92 im erforderlichen Umfang fixiert zu werden. Andere Befestigungsarten wie z. B. durch eine Schwalbenschwanzführung zwischen dem Gurt- bzw. Bandelement 84 und dem zweiten Profilelement 28 sind gleichfalls möglich.

Damit unabhängig von dem Abstand zwischen den Abschnitten 22 und 24 des ersten Profilelementes 12 die freie Außenfläche 86 des zweiten Profilelementes 28 über den Gurt 84 abgedeckt werden kann, verläuft dieser in entsprechender Länge innerhalb des zweiten Profilelementes 28 und kann auf ein Spannelement wie federvorgespannter Rolle 94 aufgerollt werden, die - wie im Ausführungsbeispiel - in dem ersten Profilelement 12, d. h. dessen oberer Längskammer 16 fixiert ist. Selbstverständlich kann das Spannelement 94 auch im im zweiten Abschnitt 24 verlaufenden Endbereich des zweiten Profilelementes 28 befestigt werden. Unabhängig hiervon wird das Gurtelement 84 im Bereich des ersten Abschnitts 22 des ersten Profilelementes 12 über eine Rolle 96 umgelenkt, wobei das Bandelement 84 in das Innere des zweiten Profilelementes 28 über einen Schlitz 98 geführt wird.

Im Ausführungsbeispiel wird der Gurt 84 über insgesamt zwei Umlenkrollen umgelenkt, die jeweils in einem Endbereich des zweiten Profilelementes 28 drehbar gelagert sind.

Anstelle des Gurtes 84 können auch auf das zweite Profilelement 28 eine oder mehrere aufsteck- oder aufclipsbare Schieber befestigt sein, deren sohlenseitige Flächen fluchtend zu den Messsohlen- bzw. -flächenabschnitten 32,34 verlaufen.

## Patentansprüche

1. Wasserwaage (10) umfassend ein erstes und ein zweites Profilelement (12, 28), die teleskopartig zueinander verschiebbar und über ein Feststellelement (54) zueinander fixier-bar sind, wobei das erste Profilelement (12) ein Hohlprofil ist,
**dadurch gekennzeichnet,**
**dass** das erste Profilelement (12) in eine erste und eine zweite Längskammer (16, 18) unterteilt ist, dass das erste Profilelement aus einem ersten und einem zweiten Abschnitt (22, 24) besteht, die über das zweite Profilelement (28) miteinander verbunden sind, dass das zweite Profilelement (28) fest mit dem ersten Abschnitt (22) verbunden ist und dass der zweite Abschnitt (24) entlang des zweiten Profilelementes (28) verschiebbar ist, dass von der ersten Längskammer (16) ein Spannelement (54) als das Feststellelement ausgeht, dass sich in der zweiten Längskammer (18) das zweite Profilelement (28) erstreckt, wobei über das Spannelement (54) einerseits bei bereichsweise von dem zweiten Abschnitt (24) unbedecktem zweitem Profilelement (28) dieses in Richtung einer Profilwandung (36) des zweiten Abschnitts (24) des ersten Profilelementes (12) kranbeaufschlagbar ist und andererseits das zweite Profilelement (28) zu dem zweiten Abschnitt (24) des ersten Profilelementes (12) fixierbar ist.

2. Wasserwaage nach Anspruch 1,
**dadurch gekennzeichnet,**
**dass** über das Spannelement (54) eine Kraftbeaufschlagung auf das insbesondere als Hohlprofil ausgebildete zweite Profilelement (28) in Richtung der Profilwandung (36) des ersten Profilelementes (12) erfolgt.

3. Wasserwaage nach Anspruch 1 oder 2,
**dadurch gekennzeichnet,**
**dass** das Spannelement ein Spindelelement, ein Schnellspannelement oder insbesondere ein Exzenterhebel (54) ist.

4. Wasserwaage nach zumindest Anspruch 1,
**dadurch gekennzeichnet,**
**dass** bei vollständig innerhalb der Abschnitte (22, 24) des ersten Profilelementes (12) verlaufendem zweiten Profilelement (28) das Spannelement (54) vollständig oder im wesentlichen vollständig von dem ersten Profilelement abgedeckt ist.

5. Wasserwaage nach zumindest Anspruch 1,
**dadurch gekennzeichnet,**
**dass** bei vollständig innerhalb der Abschnitte (22, 24) des ersten Profilelementes (12) verlaufendem zweiten Profilelement (28) die Abschnitte des ersten Profilelementes außenseitig fluchtend ineinander übergehen.

6. Wasserwaage nach Anspruch 3,
**dadurch gekennzeichnet,**
**dass** der Exzenterhebel (54) aus einem von seiner von dem ersten Profilelement (12) ausgehenden Schwenkachse (56) durchsetzten Basisabschnitt (58) und einem von diesem abragenden Betätigungsschenkel oder -hebel (60) besteht.

7. Wasserwaage nach Anspruch 3 oder 6,
**dadurch gekennzeichnet,**
**dass** der Exzenterhebel (54) in der zweiten Längskammer (16) gelagert ist.

8. Wasserwaage nach zumindest Anspruch 6,
**dadurch gekennzeichnet,**
**dass** der Basisabschnitt (58) des Exzenterhebels (54) in dessen gespannter Position eine die erste Längskammer (18) von der zweiten Längskammer (16) trennende Zwischenwandung (14) zum Wechselwirken mit dem zweiten Profilelement (28) durchsetzt.

9. Wasserwaage nach zumindest Anspruch 3,
**dadurch gekennzeichnet,**
**dass** eine Außenfläche (62) des Exzenterhebels (54) bei dessen gespannter Position sich entlang trennwandseitiger Außenfläche (64) des zweiten Profilelementes (28) und an dieser unmittelbar und/oder über zumindest einen von der Fläche ausgehenden Vorsprung abstützt.

10. Wasserwaage nach zumindest Anspruch 6,
**dadurch gekennzeichnet,**
**dass** der Exzenterhebel (54) in das zweite Profilelement (28) kraftbeaufschlagender Stellung mit seinem Betätigungsschenkel (60) dem ersten Abschnitt (22) des ersten Profilelementes (12) zugewandte freie Stirnfläche (80) des zweiten Abschnitts (24) überragt.

11. Wasserwaage nach zumindest Anspruch 3 oder 10,
**dadurch gekennzeichnet,**
**dass** beabstandet zu dem zweiten Abschnitt (24) des ersten Profilelementes (22) zugewandter freien Stirnfläche des ersten Abschnitts (22) ein den Betätigungsschenkel (60) des Exzenterhebels (54) verschwenkendes Anschlagelement (66) verläuft.

12. Wasserwaage nach Anspruch 11,
**dadurch gekennzeichnet,**
**dass** das Anschlagelement (66) von einem in dem ersten Abschnitt (22) angeordneten Einsatz (68) ausgeht.

13. Wasserwaage nach Anspruch 12,
**dadurch gekennzeichnet,**
**dass** der Einsatz (68) ein im Querschnitt H-förmiges Element, insbesondere ein Kunststoffspritzgussteil ist.

14. Wasserwaage nach Anspruch 12 oder 13,
**dadurch gekennzeichnet,**
**dass** der Einsatz (68) aus zwei identischen Teilen (70, 72) zusammengesetzt ist, die jeweils einen T-förmigen Querschnitt aufweisen.

15. Wasserwaage nach zumindest Anspruch 1,
**dadurch gekennzeichnet,**
**dass** in jeweiliger zweiten Längskammer (16, 18) der Abschnitte (22, 24) des ersten Profilelementes (12) ein Einsatz (68) angeordnet ist, der den jeweiligen freien Querschnitt der zweiten Längskammer verschließt.

16. Wasserwaage nach zumindest Anspruch 1,
**dadurch gekennzeichnet,**
**dass** mit dem zweiten Profilelement (28) zu dessen Kraftbeaufschlagung in Richtung der Profilwandung wie Profilaußenwandung (36) des ersten Profilelementes (12) zumindest ein Druckelement (46) wie Schraubenfeder zusammenwirkt.

17. Wasserwaage nach Anspruch 16,
**dadurch gekennzeichnet,**
**dass** sich das Druckelement (46) einerseits an der Trennwand (14) des ersten Profilelementes (12) und andererseits an dem zweiten Profilelement (28) abstützt.

18. Wasserwaage nach Anspruch 1,
**dadurch gekennzeichnet,**
**dass** das zweite Profilelement (28) ein Hohlprofil ist und dass das zweite Profilelement trennwandseitig zumindest bereichsweise von einem kappenförmigen Element (40) abgedeckt ist, das einen sich ins Innere des zweiten Profilelementes (28) erstreckenden Vorsprung (42) aufweist, von dem ein Federelement wie eine Schraubenfeder (46) ausgeht, das einerseits innenseitig an dem kappenförmigen Element und andererseits mittelbar oder unmittelbar an sich unmittelbar entlang der Profilaußenwandung (36) des ersten Profilelementes (12) erstreckender Wandung (86) des zweiten Profilelementes (28) bzw. deren Innenfläche abstützt.

19. Wasserwaage nach Anspruch 18,
**dadurch gekennzeichnet,**
**dass** die kraftbeaufschlagte Wandung (86) des zweiten Profilelementes (28) gegenüber Innenfläche der Profilwandung (36) des ersten Profilelementes (12) über ein Gleitelement (50, 66) abgestützt ist.

20. Wasserwaage nach zumindest Anspruch 1,
**dadurch gekennzeichnet,**
**dass** das zweite Profilelement (28) gegenüber dem ersten Profilelement (12) über zumindest ein Kugeldruckstück abgestützt ist.

21. Wasserwaage nach zumindest Anspruch 1,
**dadurch gekennzeichnet,**
**dass** die das zweite Profilelement (28) aufnehmende Längskammer (18) messsohlen- bzw. -flächenseitig verläuft.

22. Wasserwaage nach vorzugsweise einem der vorhergehenden Ansprüche,
**dadurch gekennzeichnet,**
**dass** zur Ausbildung einer durchgehenden oder im Wesentlichen durchgehenden Messsohle bzw. -fläche (20, 32, 34) der Wasserwaage (10) zwischen messsohlen- bzw. -flächenseitig verlaufender freier Außenfläche (82) des zweiten Profilelementes (28) und dem ersten und zweiten Abschnitt (22, 24) des ersten Profilelementes (12) zumindest ein Element verläuft, dessen Außenfläche fluchtend zu der Messsohle bzw. -fläche des ersten und zweiten Abschnittes ausgerichtet ist bzw. zu dieser verläuft.

23. Wasserwaage nach Anspruch 22,
**dadurch gekennzeichnet,**
**dass** das außenseitig fluchtend zu der Messsohle bzw. -fläche (20, 32, 34) verlaufende Element ein Band- oder Gurtelement ist, das insbesondere federvorgespannt zumindest abschnittsweise innerhalb des zweiten Profilelementes (28) verläuft.

24. Wasserwaage nach Anspruch 23,
**dadurch gekennzeichnet,**
**dass** das Band- oder Gurtelement (84) innerhalb des zweiten Profilelementes (28) über zumindest eine Umlenkrolle (96, 100) geführt verläuft.

25. Wasserwaage nach Anspruch 23 oder 24,
**dadurch gekennzeichnet,**
**dass** das Band- oder Gurtelement (84) magnetisch an freier Außenfläche (82) des zweiten Profilelementes (28) fixierbar ist.

26. Wasserwaage nach Anspruch 25,
**dadurch gekennzeichnet,**
**dass** das Band- oder Gurtelement (84) profilelementseitig ferritisches Material enthält oder dieses aufweist und dass von dem zweiten Profilelement (28) auf dessen freier Außenfläche (82) ausgerichtete Magnete (88, 90, 92) ausgehen.

27. Wasserwaage nach Anspruch 23,
**dadurch gekennzeichnet,**
**dass** das Gurt- oder Bandelement (84) in dem zweiten Profilelement (28) im Bereich des ersten Abschnitts (22) des ersten Profilelementes (12) umgelenkt ist und vorzugsweise über ein weiteres Spannelement wie Aufzugsrolle (94) endseitig fixiert ist, das bzw. die von dem zweiten oder dem ersten Profilelement (12, 28) ausgeht.

28. Wasserwaage nach zumindest Anspruch 1,
**dadurch gekennzeichnet,**
**dass** entlang freier Außenfläche (82) des ersten Profilelementes (28) zumindest ein Schiebeelement längsverschiebbar angeordnet ist, dessen auf der Außenfläche verschiebbarer Abschnitt eine Stärke aufweist, die gleich effektivem Abstand zwischen der Außenfläche und der Messsohle bzw. -fläche (20, 32, 34) des ersten und zweiten Abschnitts (22, 24) des ersten Profilelementes (12) ist.

29. Wasserwaage nach zumindest Anspruch 1,
**dadurch gekennzeichnet,**
**dass** das zweite Profilelement (28) in zueinander beabstandeten Bereichen gegenüber dem ersten Profilelement (12) kraftbeaufschlagt ist.

30. Wasserwaage nach zumindest Anspruch 8,
**dadurch gekennzeichnet,**
**dass** die das erste Hohlprofil (12) in die erste und zweite Längskammer (16, 18) unterteilende trennende Zwischenwandung (14) geschlossen ist oder durch beabstandete Abschnitte wie Stege gebildet ist.

## Claims

1. Spirit level (10) comprising a first and a second profile element (12, 28), which can be displaced relative to one another in a telescopic manner and can be fixed relative to one another by means of a fixing element (54), wherein the first profile element (12) is a hollow profile element,
**characterized in**
**that** the first profile element (12) is divided into a first and a second longitudinal chamber (16, 18), that the first profile element is comprised of a first and a second section (22, 24), which are joined to one another via the second profile element (28), that the second profile element (28) is firmly joined to the first section (22) and the second section (24) can be displaced along the second profile element (28), that a clamping element (54) as the fixing element extends from the first longitudinal chamber (16), that the second profile element (28) extends within the second longitudinal camber (18), whereby, when the second profile element (28) is partially uncovered by the second section (24), on the one hand the second profile element (28) can be acted upon by force by means of the clamping element (54) in the direction of a profile wall (36) of the second section (24) of the first profile element (12), and on the other hand the second profile element (28) can be fixed relative to the second section (24) of the first profile element (12).

2. Spirit level according to claim 1,
**characterized in**
**that** via the clamping element (54) an acting by force upon the second profile element (28), which is designed in particular as a hollow profile, in the direction of the profile wall (36) of the first profile element (12) results.

3. Spirit level according to claim 1 or 2,
**characterized in**
**that** the clamping element is a spindle element, a quick-action element, or especially an eccentric lever (54).

4. Spirit level according to at least claim 1,
**characterized in**
**that** when the second profile element (28) extends completely inside the sections (22, 24) of the first profile element (12), the clamping element (54) is completely or essentially completely covered by the first profile element.

5. Spirit level according to at least claim 1,
**characterized in**
**that** when the second profile element (28) extends completely inside the sections (22, 24) of the first profile element (12), the sections of the first profile element pass into one another in alignment on the outside.

6. Spirit level according to claim 3,
**characterized in**
**that** the eccentric lever (54) is comprised of a base section (58), through which its pivoting axis (56) that extends from the first profile element (12) passes, and an actuating arm or lever (60) protruding from said base section.

7. Spirit level according to claim 3 or 6,
**characterized in**
**that** the eccentric lever (54) is housed in the second longitudinal chamber (16).

8. Spirit level according to at least claim 6,
**characterized in**
**that** the base section (58) of the eccentric lever (54) in its clamped position passes through an intermediate wall (14) that separates the first longitudinal chamber (18) from the second longitudinal chamber (16), for the purpose of interacting with the second profile element (28).

9. Spirit level according to at least claim 3,
**characterized in**
**that** an outer surface (62) of the eccentric lever (54), when said lever is in the clamped position, is supported along the outer surface (64) of the second profile element (28) on the side of the dividing wall, directly and/or at least over a projection that protrudes from the surface.

10. Spirit level according to at least claim 6,
**characterized in**
**that** when the eccentric lever (54) is in the position in which the second profile element (28) is acted upon by force, the actuating leg (60) of the lever extends over the open end surface (80) of the second section that faces the first section (22) of the first profile element (12).

11. Spirit level according to at least claim 3 or 10,
**characterized in**
**that** a stop element (66) that pivots the actuating leg (60) of the eccentric lever (54) extends distanced from the open end surface of the first section (22) that faces the second section (24) of the first profile element (22).

12. Spirit level according to claim 11,
**characterized in**
**that** the stop element (66) extends from an insert (68) arranged in the first section (22).

13. Spirit level according to claim 12,
**characterized in**
**that** the insert (68) is an element that is H-shaped in its cross-section, especially an injection molded element.

14. Spirit level according to claim 12 or 13,
**characterized in**
**that** the insert (68) is comprised of two identical components (70, 72), each of which is T-shaped in its cross-section.

15. Spirit level according to at least claim 1,
**characterized in**
**that** an insert (68) is positioned in each second longitudinal chamber (16, 18) of the sections (22, 24) of the first profile element (12), which serves to close the open cross-section of the second longitudinal chamber.

16. Spirit level according to at least claim 1,
**characterized in**
**that** at least one pressure element (46) such as coil spring cooperates with the second profile element (28) for acting upon it by force in the direction of the profile wall such as the profile outer wall (36) of the first profile element (12).

17. Spirit level according to claim 16,
**characterized in**
**that** the pressure element (46) is supported on the one hand against the dividing wall (14) of the first profile element (12) and on the other hand against the second profile element (28).

18. Spirit level according claim 1,
**characterized in**
**that** the second profile element (28) is a hollow profile, and that the second profile element is covered on the side of the dividing wall at least partially by a cap-shaped element (40), which comprises a projection (42) that extends into the inside of the second profile element (28), from which projection a spring element such as a coil spring (46) extends, which is supported on the one hand on the inside against the cap-shaped element and on the other hand indirectly or directly against the wall (86) of the second profile element (28) that extends directly along the profile outer wall (36) of the first profile element (12), or the inner surface of the second profile element.

19. Spirit level according to claim 18,
**characterized in**
**that** the wall (86), that is acted upon by force, of the second profile element (28) is supported against the inner surface of the profile wall (36) of the first profile element (12) by means of a sliding element (50, 66).

20. Spirit level according to at least claim 1,
**characterized in**
**that** the second profile element (28) is supported relative to the first profile element (12) by means of at least one ball indentation element.

21. Spirit level according to at least claim 1,
**characterized in**
**that** the longitudinal chamber (18) that houses the second profile element (28) extends on the side of the measuring bed or surface.

22. Spirit level according to preferably one of the preceding claims,
**characterized in**
**that** in order to form a continuous or essentially continuous measuring bed or surface (20, 32, 34) for the spirit level (10), at least one element extends between the open outer surface (82) of the second profile element (28), which extends on the side of the measuring bed or surface, and the first and second section (22, 24) of the first profile element (12), wherein the outer surface of said element is oriented in alignment with the measuring bed or surface of the first and second sections, or extends toward said bed or surface.

23. Spirit level according to claim 22,
**characterized in**
**that** the element that extends on the outside in alignment with the measuring bed or surface (20, 32, 34) is a band or belt element, which extends in particular preloaded by means of a spring, at least in sections, inside the second profile element (28).

24. Spirit level according to claim 23,
**characterized in**
**that** the band or belt element (84) extends inside the second profile element (28), guided over at least one guiding roller (96, 100).

25. Spirit level according to claim 23 or 24,
**characterized in**
**that** the band or belt element (84) can be magnetically fixed to open outer surface (82) of the second profile element (28).

26. Spirit level according to claim 25,
**characterized in**
**that** the band or belt element (84) contains ferrous material on the side of the profile element, or is provided with said material, and that magnets (88, 90, 92) extend from the second profile element (28), oriented on its open outer surface (82).

27. Spirit level according to claim 23,
**characterized in**
**that** the belt or band element (84) is diverted in the second profile element (28) in the area of the first section (22) of the first profile element (12), and is preferably fixed at its end by means of a further clamping element such as a winding roller (94), which extends from the second or the first profile element (12, 28).

28. Spirit level according to at least claim 1,
**characterized in**
**that** along the open outer surface (82) of the first profile element (28) at least one sliding element is arranged such that it can be displaced longitudinally, wherein the thickness of the section that can be displaced on the outer surface is equal to the effective distance between the outer surface and the measuring bed or surface (20, 32, 34) of the first and second section (22, 24) of the first profile element (12).

29. Spirit level according to at least claim 1,
**characterized in**
**that** the second profile element (28) is acted upon by force relative to the first profile element (12) in areas that are distanced from one another.

30. Spirit level according to at least claim 8,
**characterized in**
**that** the dividing intermediate wall (14) that separates the first hollow profile (12) into the first and second longitudinal chamber (16, 18) is closed or is formed by sections that are distanced from one another, such as bridges.

## Revendications

1. Niveau à bulle (10) comprenant un premier et un deuxième éléments de profil (12, 28) mobiles de façon télescopique l'un par rapport à l'autre et pouvant être fixés l'un à l'autre par un élément de blocage (54), le premier élément de profil (12) étant un profil creux,
**caractérisé en ce que**
le premier élément de profil (12) est séparé en une première et une deuxième chambres longitudinales (16, 18),
le premier élément de profil est composé d'un premier et d'un deuxième segments (22, 24) reliés l'un à l'autre par le deuxième élément de profil (28),
le deuxième élément de profil (28) est relié solidement au premier segment (22) et le deuxième segment (24) peut coulisser le long du deuxième élément de profil (28),
un élément de serrage (54) servant d'élément de blocage part de la première chambre longitudinale (16),
le deuxième élément de profil (28) s'étend dans la deuxième chambre longitudinale (18),
l'élément de serrage (54) permettant d'une part, si le deuxième élément de profil (28) n'est en partie pas recouvert par le deuxième segment (24), d'exercer une force sur celui-ci en direction d'une paroi de profil (36) du deuxième segment (24) du premier élément de profil (12), et d'autre part de fixer le deuxième élément de profil (28) par rapport au deuxième segment (24) du premier élément de profil (12).

2. Niveau à bulle selon la revendication 1,
**caractérisé en ce que**
l'élément de profil (28) en particulier en forme de profil creux est sollicité par une force par l'élément de serrage (54) en direction de la paroi de profil (36) du premier élément de profil (12).

3. Niveau à bulle selon la revendication 1 ou 2,
**caractérisé en ce que**
l'élément de serrage est une broche, un élément de serrage rapide ou en particulier un levier à excentrique (54).

4. Niveau à bulle selon au moins la revendication 1,
**caractérisé en ce que**
si le deuxième élément de profil (28) s'étend entièrement à l'intérieur des segments (22, 24) du premier élément de profil (12), l'élément de serrage (54) est complètement ou pour l'essentiel complètement recouvert par le premier élément de profil.

5. Niveau à bulle selon au moins la revendication 1,
**caractérisé en ce que**
si le deuxième élément de profil (28) s'étend entièrement à l'intérieur des segments (22, 24) du premier élément de profil (12), les segments du premier élément de profil passant l'un dans l'autre leur faces extérieures étant alignées.

6. Niveau à bulle selon la revendication 3,
**caractérisé en ce que**
le levier à excentrique (54) est composé d'un segment de base (58) traversé par son axe de pivotement (56) partant du premier élément de profil (12), et d'un bras ou levier d'actionnement (60) faisant saillie du segment de base.

7. Niveau à bulle selon la revendication 3 ou 6,
**caractérisé en ce que**
le levier à excentrique (54) est logé dans la deuxième chambre longitudinale (16).

8. Niveau à bulle selon au moins la revendication 6,
**caractérisé en ce que**
le segment de base (58) du levier à excentrique (54), dans la position serrée de celui-ci, est traversé par une paroi intermédiaire (14) séparant la première chambre longitudinale (18) de la deuxième chambre longitudinale (16) pour interagir avec le deuxième élément de profil (28).

9. Niveau à bulle selon au moins la revendication 3,
**caractérisé en ce qu'**
une surface extérieure (62) du levier à excentrique (54), dans la position serrée de celui-ci, s'étend le long d'une surface extérieure (64) côté paroi de séparation du deuxième élément de profil (28) et prend appui contre celle-ci directement et/ou par au moins une saillie partant de la surface.

10. Niveau à bulle selon au moins la revendication 6,
**caractérisé en ce que**
le levier à excentrique (54), dans la position sollicitant le deuxième élément de profil (28) par une force, dépasse par son bras d'actionnement (60) de la surface frontale libre (80) du deuxième segment (24) tournée vers le premier segment (22) du premier élément de profil (12).

11. Niveau à bulle selon au moins la revendication 3 ou 10,
**caractérisé en ce qu'**
à distance de la surface frontale du premier segment (22) tournée vers le deuxième segment (24) du premier élément de profil (22) s'étend un élément de butée (66) qui fait pivoter le bras d'actionnement (60) du levier à excentrique (54).

12. Niveau à bulle selon la revendication 11,
**caractérisé en ce que**
l'élément de butée (66) part d'un insert (68) disposé dans le premier segment (22).

13. Niveau à bulle selon la revendication 12,
**caractérisé en ce que**
l'insert (68) est un élément d'une section transversale en forme de H, en particulier une pièce en matière plastique moulée par injection.

14. Niveau à bulle selon la revendication 12 ou 13,
**caractérisé en ce que**
l'insert (68) est composé de deux pièces (70, 72) identiques qui présentent chacune une section transversale en forme de T.

15. Niveau à bulle selon au moins la revendication 1,
**caractérisé en ce que**
dans chaque deuxième chambre longitudinale (16, 18) des segments (22, 24) du premier élément de profil (12), un insert (68) ferme la section transversale libre de la deuxième chambre longitudinale concernée.

16. Niveau à bulle selon au moins la revendication 1,
**caractérisé en ce qu'**
avec le deuxième élément de profil (28), au moins un élément de pression (46) tel qu'un ressort hélicoïdal coopère pour exercer une force sur celui-ci en direction de la paroi de profil telle que la paroi extérieure de profil (36) du premier élément de profil (12).

17. Niveau à bulle selon la revendication 16,
**caractérisé en ce que**
l'élément de pression (46) prend appui d'une part sur la paroi de séparation (14) du premier élément de profil (12) et d'autre part sur le deuxième élément de profil (28).

18. Niveau à bulle selon la revendication 1,
**caractérisé en ce que**
le deuxième élément de profil (28) est un profil creux, et le deuxième élément de profil est recouvert au moins partiellement par un élément (40) en forme de capuchon qui présente une saillie (42) s'étendant dans l'intérieur du deuxième élément de profil (28), de laquelle part un élément de ressort tels qu'un ressort hélicoïdal (46) qui prend appui d'une part sur la face intérieure de l'élément en forme de capuchon, et d'autre part indirectement ou directement sur la paroi (86) du deuxième élément de profil (28) ou sur sa surface intérieure s'étendant directement le long de la paroi extérieure de profil (36) du premier élément de profil (12).

19. Niveau à bulle selon la revendication 18,
**caractérisé en ce que**
la paroi (86) du deuxième élément de profil (28) sollicitée par une force est supportée par un élément coulissant (50, 66) par rapport à la surface intérieure de la paroi de profil (36) du premier élément de profil (12).

20. Niveau à bulle selon au moins la revendication 1,
**caractérisé en ce que**
le deuxième élément de profil (28) est supporté par au moins une pièce de pression sphérique par rapport au premier élément de profil (12).

21. Niveau à bulle selon au moins la revendication 1,
**caractérisé en ce que**
la chambre longitudinale (18) logeant le deuxième élément de profil (28) s'étend du côté de la semelle ou surface de mesure.

22. Niveau à bulle selon de préférence l'une des revendications précédentes,
**caractérisé en ce que**
pour former une semelle ou surface de mesure (20, 32, 34) continue ou essentiellement continue du niveau à bulle (10) au moins un élément s'étend entre la surface extérieure libre (82) du deuxième élément de profil (28) s'étendant côté semelle ou surface de mesure et le premier et deuxième segments (22, 24) du premier élément de profil (12), dont la surface extérieure est alignée avec la semelle ou surface de mesure du premier et du deuxième segments.

23. Niveau à bulle selon la revendication 22,
**caractérisé en ce que**
l'élément aligné côté extérieur avec la semelle ou surface de mesure (20, 32, 34) est un élément en forme de bande ou de sangle qui s'étend, en particulier de façon précontrainte par ressort, au moins partiellement à l'intérieur du deuxième élément de profil (28).

24. Niveau à bulle selon la revendication 23,
**caractérisé en ce que**
l'élément en forme de bande ou de sangle (84) s'étend à l'intérieur du deuxième élément de profil (28) de façon guidée par au moins un rouleau de renvoi (96, 100).

25. Niveau à bulle selon la revendication 23 ou 24,
**caractérisé en ce que**
l'élément en forme de bande ou de sangle (84) peut être fixé de façon magnétique à la surface extérieure libre (82) du deuxième élément de profil (28).

26. Niveau à bulle selon la revendication 25,
**caractérisé en ce que**
côté élément de profil l'élément en forme de bande ou de sangle (84) contient ou présente un matériau ferritique, et du deuxième élément de profil (28) partent des aimants (88, 90, 92) orientés vers la surface extérieure libre (82) de celui-ci.

27. Niveau à bulle selon la revendication 23,
**caractérisé en ce que**
l'élément en forme de bande ou de sangle (84) dans le deuxième élément de profil (28) est dévié dans la zone du premier segment (22) du premier élément de profil (12), et fixé côté extrémité de préférence par un autre élément de serrage tel qu'un rouleau d'armement (94) qui part du deuxième ou du premier élément de profil (12, 28).

28. Niveau à bulle selon au moins la revendication 1,
**caractérisé en ce que**
le long de la surface extérieure libre (82) du premier élément de profil (28) on a au moins un élément coulissant longitudinalement dont le segment coulissant sur la surface extérieure présente une épaisseur égale à la distance effective entre la surface extérieure de la semelle ou surface de mesure (20, 32, 34) des premier et deuxième segments (22, 24) du premier élément de profil (12).

29. Niveau à bulle selon au moins la revendication 1,
**caractérisé en ce que**
le deuxième élément de profil (28) est sollicité par une force dans des zones écartées l'une de l'autre par rapport au premier élément de profil (12).

30. Niveau à bulle selon au moins la revendication 8,
**caractérisé en ce que**
la paroi intermédiaire (14) divisant le premier profil creux (12) en la première et la deuxième chambres longitudinales (16, 18), est fermée ou formée par des segments écartés tels que des entretoises.
